# EUROPEAN PATENT APPLICATION

(11) **EP 4 494 784 A1**
(43) Date of publication of application: **22.01.2025**
(21) Application number: 23770408.5
(22) Date of filing: 01.03.2023
(51) Int. Cl.: B22F 5/00, B22F 3/105, B22F 7/08, B23K 10/02, B23K 26/342, C23C 8/26, C23C 8/38

(54) **COMPOSITE MATERIAL, METHOD FOR PRODUCING COMPOSITE MATERIAL, AND MOLD**

(30) Priority: 17.03.2022 JP 2022042997
(71) Applicant: Proterial, Ltd., Tokyo 135-0061 (JP)
(72) Inventor: ITO Yuri, Tokyo 135-0061 (JP); KOSEKI Shuho, Tokyo 135-0061 (JP); KUWABARA Kousuke, Tokyo 135-0061 (JP); OKAMOTO Shinya, Tokyo 135-0061 (JP)
(74) Representative: MERH-IP Matias Erny Reichl Hoffmann Patentanwälte PartG mbB
(86) International application number: PCT/JP2023/007543
(87) International publication number: WO 2023/176450

(57) **Abstract**

This invention provides a composite material that is durable in a hot environment and easily produced. The composite material according to the invention has an overlaid part comprising high-melting-point metal in at least a part on the surface of a low-melting-point alloy member having a melting point of 1600°C or lower. The overlaid part comprising high-melting-point metal comprises high-melting-point metal particles comprising high-melting-point metal elements having a melting point of 2400°C or higher scattered therein, and 40% or more of the high-melting-point metal particles has a roundness of 0.7 or higher. The low-melting-point alloy member comprises one type of a low-melting-point alloy selected from among a Fe-based alloy, a Ni-based alloy, a Co-based alloy, a Ti-based alloy, a Cr-based alloy, and a high-entropy alloy and the high-melting-point metal particles comprise at least one type of high-melting-point metal element selected from among W, Ta, Mo, and Nb.

## Description

### Technical Field

The present invention relates to a composite material, a method for producing a composite material, and a mold using such composite material. More particularly, the present invention relates to, for example, a composite material preferably used for a mold, such as a casting mold used to cast an aluminum alloy, a method for producing a composite material, and a mold.

### Background Art

For a structure used in a hot environment, for example, a metal material having heat resistance, such as JIS (Japanese Industrial Standards) SKD61, is used. When structures such as low-pressure casting, gravity casting, die casting, and other molds for aluminum alloys are used in a hot environment, damage or deformation may occur. As causes of damage when using a mold, for example, dissolution loss and galling are known. When a structure suffers from damage or deformation, a damaged or deformed site is repaired by overlaying a repairing material thereon. In such a case, a repairing material is preferably an alloy with heat resistant properties, such as a high melting point and dissolution loss resistance.

### Citation List

### Patent Literature

Patent Literature 1: JP Patent Publication (Kohyo) No. H01-502680 A

### Summary of Invention

### Technical Problem

The alloy disclosed in Patent Literature 1 has a high melting point and excellent creep strength; that is, it has heat resistance. However, a high-melting-point metal, such as the alloy disclosed in Patent Literature 1, has difficulty in producing a structure, such as a mold, by casting because of its high melting point. When producing a structure using such a high-melting-point metal, accordingly, production is often performed by sintering as disclosed in Patent Literature 1. While sintering facilitates production of the entire structure with the use of a single type of a metal, sintering is not suitable for production of a structure with the use of different types of metals in combination for the following reasons. That is, thermal stress cracking may occur because of differences in thermal expansion coefficients among different types of metals. When producing a structure using a high-melting-point metal, accordingly, it is preferable to produce the entire structure with the use of a single type of a metal by sintering. However, the structure consisting of a high-melting-point metal is not practical in terms of a production cost and usability because the material is very expensive and has a very high specific gravity.

Under the above circumstances, the objects of the present invention are to provide a composite material that is durable when used in a hot environment and contributes to cost reduction, a method for easily producing such composite material, and a mold using such composite material.

### Solution to Problem

In order to attain the above objects, the composite material according to the present invention comprises an overlaid part (an padding part) comprising high-melting-point metal in at least a part on the surface of a low-melting-point alloy member having a melting point of 1600°C or lower, wherein the overlaid part comprising high-melting-point metal comprises high-melting-point metal particles comprising high-melting-point metal elements having a melting point of 2400°C or higher scattered therein and 40% or more of the high-melting-point metal particles has a roundness (circularity) of 0.7 or higher.

The method for producing the composite material according to the present invention comprises a step of forming an overlaid part comprising high-melting-point metal in which the high-melting-point metal particles are scattered by feeding starting powders comprising the high-melting-point metal particles comprising high-melting-point metal elements having a melting point of 2400°C or higher with a roundness of 0.7 or higher to the surface of the low-melting-point alloy member while applying an energy to the surface of a low-melting-point alloy member having a melting point of 1600°C or lower to melt the low-melting-point alloy member.

In addition, the mold according to the present invention is a mold using the composite material described above.

### Advantageous Effects of Invention

The composite material according to the present invention comprises, in a part thereof, an overlaid part comprising high-melting-point metal comprising high-melting-point metal elements in the form of particles. Thus, the composite material can exert durability when used in a hot environment and it can contribute to cost reduction. With the use of such composite material, in addition, a mold that is easily produced and suitable for use in a hot environment can be provided.

### Brief Description of Drawings

[Figure 1 A] Figure 1 A shows an optical microscope image showing the entire overlaid part comprising high-melting-point metal of Example 1 observed at 30× magnification.
[Figure 1 B] Figure 1 B shows an optical microscope image showing high-melting-point metal particles in the overlaid part comprising high-melting-point metal of Example 1 observed at 500× magnification.
[Figure 2] Figure 2 shows an optical microscope image showing high-melting-point metal particles in the overlaid part comprising high-melting-point metal of Reference Example observed at 500× magnification.
[Figure 3] Figure 3 shows an optical microscope image showing high-melting-point metal particles in the overlaid part comprising high-melting-point metal of Example 2 observed at 500× magnification.
[Figure 4] Figure 4 shows an optical microscope image showing high-melting-point metal particles in the overlaid part comprising high-melting-point metal of Example 3 observed at 500× magnification.

### Description of Embodiments

Hereafter, embodiments of the composite material, the method for producing the composite material, and the mold according to the present invention are described with reference to the figures and the like. The description provided below demonstrates specific examples of the disclosure of the present invention, and the present invention is not limited to these examples. A person skilled in the art can make various modification and improvement on the present invention within the technical scope disclosed herein. In all the figures illustrating the present invention, members having the identical function are indicated by the identical reference signs, and the repeated description thereof may be omitted.

The preposition "to" is used herein to include numerical values before and after the preposition as the lower limit and the upper limit. In numerical ranges demonstrated in phases herein, the upper or lower limit within a numerical range may be substituted with another upper or lower limit demonstrated in phases. The upper or lower limit within a numerical range provided herein may be substituted with a value provided in the examples.

When a material is selected from among materials exemplified below, a single material may be selected or a plurality of materials may be selected in combination within a scope consistent with the present disclosure. Alternatively, materials other than the materials exemplified below may be selected within a scope consistent with the present disclosure.

### [Composite material]

A composite material according to an embodiment comprises an overlaid part comprising high-melting-point metal in at least a part on the surface of a low-melting-point alloy member having a melting point of 1600°C or lower, wherein the overlaid part comprising high-melting-point metal comprises high-melting-point metal particles comprising high-melting-point metal elements having a melting point of 2400°C or higher scattered therein, and 40% or more of the high-melting-point metal particles has a roundness of 0.7 or higher. The "overlaid part comprising high-melting-point metal" comprises high-melting-point metal particles comprising high-melting-point metal elements that account for, for example, 90% by mass or more thereof scattered therein. This does not indicate that the melting point of the overlaid part comprising high-melting-point metal is high.

In a composite material according to an embodiment, a low-melting-point alloy member is equivalent to, for example, a mold substrate. The composite material has, for example, an overlaid part comprising high-melting-point metal in which a large quantity of high-melting-point metal elements are comprised in high-melting-point metal particles with a high roundness in at least a part on the surface of the mold substrate. Accordingly, it is not necessary to produce the entire structure of a structure, such as a mold, with the use of a high-melting-point metal, and it is possible to selectively form a site where damage or deformation is likely to occur with the use of high-melting-point metals. This enables the use of a high-melting-point metal that is difficult to be applied to a structure such as a mold as a material constituting a part of the structure. Thus, a structure having a high melting point and excellent heat resistance can be produced, and damage or deformation of a structure occurring in a hot environment can be suppressed.

### [Low-melting-point alloy member]

A low-melting-point alloy member is not particularly limited, provided that it comprises an alloy having a melting point of 1600°C or lower (hereafter, it may be abbreviated as a "low-melting-point alloy"). A member comprising a low-melting-point alloy with a melting point that is equivalent to or higher than the preheating temperature described below (300°C to 700°C) is preferable. A preferable example of a low-melting-point alloy member is a member comprising at least one type of a low-melting-point alloy selected from among a Fe-based alloy, a Ni-based alloy, a Co-based alloy, a Ti-based alloy, a Cr-based alloy, and a high-entropy alloy. Such low-melting-point alloys are easily produced as alloys having a melting point of 1600°C or lower. With the application of the energy, such as the arc, laser, or electron beam energy (hereafter, it is referred to as the "thermal energy"), accordingly, a molten pool is easily prepared. A member comprising a Fe-based alloy is particularly preferable as a low-melting-point alloy member.

A Fe-based alloy is not particularly limited, provided that it comprises Fe. For example, a Fe-based alloy comprises 50% by mass or more Fe and at least one element selected from among nickel (Ni), chromium (Cr), cobalt (Co), molybdenum (Mo), tungsten (W), niobium (Nb), aluminum (Al), titanium (Ti), zirconium (Zr), tantalum (Ta), vanadium (V), hafnium (Hf), manganese (Mn), silicon (Si), lanthanum (La), magnesium (Mg), carbon (C), and boron (B). When a low-melting-point alloy member consists of a Fe-based alloy, for example, the low-melting-point alloy member comprises 50% by mass or more Fe, 18.0% by mass to 19.0% by mass Ni, 8.5% by mass to 9.5% by mass Co, 4.7% by mass to 5.2% by mass Mo, 0.05% by mass to 0.15% by mass Al, 0.5% by mass to 0.7% by mass Ti, 0.1% by mass or less Mn, 0.1% by mass or less Si, 0.01% by mass or less P and S, and 0.03% by mass or less C.

A Ni-based alloy is not particularly limited, provided that it comprises Ni. For example, a Ni-based alloy comprises 50% by mass or more Ni and at least one element selected from among chromium (Cr), cobalt (Co), molybdenum (Mo), tungsten (W), niobium (Nb), aluminum (Al), titanium (Ti), iron (Fe), zirconium (Zr), tantalum (Ta), vanadium (V), hafnium (Hf), manganese (Mn), silicon (Si), lanthanum (La), magnesium (Mg), carbon (C), and boron (B). When a low-melting-point alloy member consists of a Ni-based alloy, for example, the low-melting-point alloy member comprises 50% by mass or more Ni, 8% by mass to 22% by mass Cr, 28.5% by mass or less Co, 14.5% by mass or less Mo, 12% by mass or less W, 5% by mass or less Nb, 6.1% by mass or less Al, 4.7% by mass or less Ti, 18.5% by mass or less Fe, 0.1% by mass or less Zr, 4% by mass or less Ta, 1.0% by mass or less V, 1.3% by mass or less Hf, 0.05% by mass to 0.7% by mass Mn, 0.5% by mass or less Si, 0.02% by mass or less La, 0.02% by mass or less Mg, 0.02% by mass to 0.2% by mass C, and 0.05% by mass or less B.

A Co-based alloy is not particularly limited, provided that it comprises Co. For example, a Co-based alloy comprises 50% by mass or more Co and at least one element selected from among Cr, Ni, W, Mo, V, Fe, Mn, Si, and C. When a low-melting-point alloy member consists of a Co-based alloy, for example, the low-melting-point alloy member comprises 50% by mass or more Co, 30% by mass or less Cr, 22% by mass or less Ni, 15% by mass or less W, 4.25% by mass or less Mo, 1.7% by mass or less V, 50% by mass or less Fe, 2.0% by mass or less Mn, 1.0% by mass or less Si, and 1.1% by mass or less C.

A Ti-based alloy is not particularly limited, provided that it comprises Ti. For example, a Ti-based alloy comprises 50% by mass or more Ti and at least one element selected from among Fe, Cr, W, Mo, Nb, Al, Zr, Ta, V, Y, Sn, Cu, Mn, Si, C, N, O, and H. When a low-melting-point alloy member consists of a Ti-based alloy, for example, the low-melting-point alloy member comprises 50% by mass or more Ti, 5.50% by mass to 6.75% by mass Al, 3.5% by mass to 4.5% by mass V, 0.3% by mass or less Fe, 0.08% by mass or less C, 0.2% by mass or less O, 0.05% by mass or less N, and 0.015% by mass or less H.

A method for producing a low-melting-point alloy member (e.g., a member of a mold) is not particularly limited, and examples of methods include a casting method and an additive manufacturing method.

### [Overlaid part comprising high-melting-point metal]

In a composite material according to an embodiment, the overlaid part comprising high-melting-point metal comprises high-melting-point metal particles comprising high-melting-point metal elements having a melting point of 2400°C or higher scattered therein, and the high-melting-point metal particles comprise, for example, 90% by mass or more high-melting-point metal elements having a melting point of 2400°C or higher. In the metal particles comprising high-melting-point metal, the content of particles with a relatively high roundness of 0.7 or higher is 40% or more. Thus, the fatigue strength and other properties of the overlaid part comprising high-melting-point metal are improved. When the content of metal particles with a roundness of 0.7 or higher is less than 40%, in contrast, sufficient effects cannot be attained.

Also, the overlaid part comprising high-melting-point metal comprises the high-melting-point metal elements that account for 50% by mass to 95% by mass thereof. The overlaid part comprising high-melting-point metal comprises the high-melting-point metal elements that account for 50% by mass to 95% by mass thereof. This improves dissolution loss resistance and other performance. When the content of the high-melting-point metal elements is less than 50% by mass, sufficient effects cannot be attained.

A roundness is measured in the manner described below, which is described in the examples below.

A roundness is determined by obtaining an optical microscope image observed at 500× magnification and digitizing tungsten particles and substances other than the tungsten particles in the optical microscope image by image processing using image analysis software "Azoukun ver. 2.5" (Asahi Kasei Engineering Corporation.) to calculate the roundness based on the area and the peripheral length of the tungsten particles in accordance with the equation (3) below. Roundness = 4 × π × (the area of high-melting-point metal particles) / (the peripheral length of the high-melting-point metal particles)2

The optical microscope images obtained at two sites are analyzed in terms of a roundness of high-melting-point metal particles in each of the sites where the optical microscope images were obtained, the roundness and the number of particles obtained in one site are totalized with those obtained in another site, and the percentage of particles by roundness is determined.

The composite material preferably has a depth of overlaying (the overlaid part) from the surface of the overlaid part (the padding part) comprising high-melting-point metal (i.e., a thickness of the overlaid part comprising high-melting-point metal) of 300 µm or more, more preferably 500 µm or more, and further preferably 600 µm or more. The depth of overlaying (the depth of the overlaid part) from the surface of the overlaid part comprising high-melting-point metal is the depth of the overlaid part comprising high-melting-point metal from the surface of the overlaid part comprising high-melting-point metal. Al dissolution loss may advance locally depending on the conditions of usage. When the local dissolution loss reaches the substrate component, dissolution loss rapidly advances therefrom. When the depth of overlaying is less than the lower limit, dissolution loss may rapidly occur. The composite material preferably has the Rockwell hardness of 40 HRC or higher or the Vickers hardness of 300 Hv or higher in the overlaid part comprising high-melting-point metal, with the Vickers hardness of 400 Hv or higher being more preferable. Such material is preferable because remarkable effects of suppressing deformation at high temperature are attained.

### [Structure of overlaid part comprising high-melting-point metal]

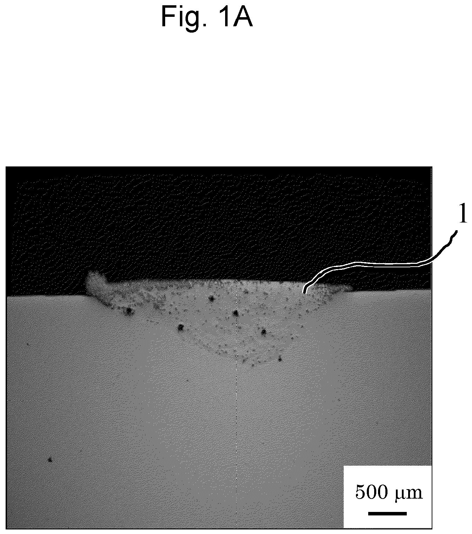

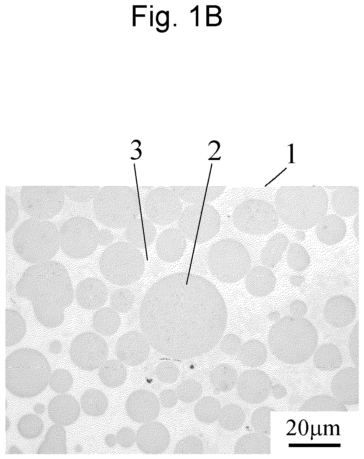

Figure 1 shows an image showing a melt-solidified structure of the overlaid part comprising high-melting-point metal according to an example of the composite material of the embodiment obtained by cutting the composite material on a plane perpendicular to the travel direction of the bead (an overlaid part comprising high-melting-point metal) to obtain a cross section, mirror-polishing the cross section, and observing the polished cross section. Figure 1 A shows the entire overlaid part comprising high-melting-point metal and Figure 1 B shows high-melting-point metal particles of the overlaid part comprising high-melting-point metal. As shown in Figure 1 B, the overlaid part 1 comprising high-melting-point metal comprises high-melting-point metal particles 2 with a relatively high roundness, which is specifically a roundness of 0.7 or higher, scattered in the melt-solidified structure of the low-melting-point alloy in an amount of 40% or more, and the melt-solidified structure comprises the high-melting-point metal particles 2 and a binder phase 3 surrounding the high-melting-point metal particles 2.

The high-melting-point metal particles 2 are not particularly limited, provided that such high-melting-point metal particles comprise high-melting-point metal elements having a melting point of 2400°C or higher that account for, for example, 90% by mass or more thereof. For example, the high-melting-point metal particles 2 have body-centered cubic (BCC) structures and comprise high-melting-point metal elements, such as W (melting point: 3422°C), Ta (melting point: 3020°C), Mo (melting point: 2623°C), and Nb (melting point: 2469°C), that account for 90% by mass or more thereof.

A binder phase 3 is, for example, a phase in which some of the high-melting-point metal elements comprised in the high-melting-point metal particles 2 is dissolved in a type of a low-melting-point alloy selected from among the Fe-based alloy, the Ni-based alloy, the Co-based alloy, the Ti-based alloy, the Cr-based alloy, and the high-entropy alloy, etc. described above. The binder phase 3 may be divided into two or three phases depending on the combination of a low-melting-point alloy and the high-melting-point metal particles 2, production conditions, and the like. When the binder phase 3 is divided into two or more phases, the binder phase 3 is often divided into at least one of a solid-solution phase consisting of a face-centered-cubic (FCC) phase and a solid-solution phase consisting of a BCC phase and at least one intermetallic compound comprising high-melting-point metal elements (a high-melting-point metal element) comprised in the high-melting-point metal particles that accounts for 30% by mass or more thereof (hereafter, it may be abbreviated as an "intermetallic compound"). In such a case, the binder phase 3 comprises an intermetallic compound having a high melting point. Thus, heat resistance is improved, and deformation or dissolution loss is less likely to occur. While the crystalline structure of the high-melting-point intermetallic compound varies depending on the combination of a low-melting-point alloy and the high-melting-point metal particles 2, for example, the crystalline structure may be the µ phase (Fe₇W₆) represented by the space group R-3m or the Laves C14 phase (Fe₂W) represented by the space group P63/mmc. Alternatively, the binder phase 3 may have a dendritic structure characteristic of the melt-solidified structure. A dendritic structure is not observed in a sintered compact obtained by sintering, but it is observed in an overlaid part produced by additive manufacturing involving melt solidification. When a solid solution phase is an FCC phase having toughness superior to that of the BCC phase, the overlaid part has higher toughness, and cracking is less likely to occur at the time of molding.

### [High-melting-point metal particles and intermetallic compound]

It is preferable that the overlaid part comprising high-melting-point metal have the intermetallic compound and that the total area ratio of the high-melting-point metal particles and the intermetallic compound on the cross section of the overlaid part comprising high-melting-point metal be 20% or more. Both the high-melting-point metal particles and the intermetallic compound have high melting points, hardness, and chemical stability. If the total area ratio thereof is 20% or more, accordingly, the durability of the composite material is improved to a significant extent. In addition, high-melting-point metal particles do not substantially comprise other elements and thus have high thermal conductivity. The term "the total area ratio of the high-melting-point metal particles and the intermetallic compound on the cross section of the overlaid part comprising high-melting-point metal" refers to a percentage of an area thereof on the cross section of the overlaid part comprising high-melting-point metal (e.g., a cross section perpendicular to the extended direction of the overlaid part comprising high-melting-point metal extended). For example, such total area ratio can be determined by cutting the overlaid part comprising high-melting-point metal to obtain a cross section, mirror-polishing the cross section, observing the cross section under a scanning electron microscope (SEM) to obtain a backscattered electron image, and subjecting the backscattered electron image to binary image processing. Alternatively, the area ratio of high-melting-point metal particles can be determined by observing the optical microscope image.

The high-melting-point metal particles are not particularly limited, provided that the content of high-melting-point metal elements having a melting point of 2400°C or higher is, for example, 90% by mass or more therein. For example, particles comprising at least one type of a high-melting-point metal element selected from among W, Ta, Mo, and Nb are preferable, particles comprising at least one type of such high-melting-point metal element that accounts for 90% by mass or more thereof are more preferable, and particles comprising W that accounts for 90% by mass or more thereof are particularly preferable for the following reason. That is, thermal conductivity can be improved because of high thermal conductivity of W. The high-melting-point metal particles may comprise V and/or Cr, in addition to the high-melting-point metal element.

### [Method for producing composite material I]

The method for producing a composite material according to an embodiment comprises a step of forming an overlaid part comprising high-melting-point metal in which at least some starting powders comprising the high-melting-point metal particles (which are referred to as "high-melting-point powders") are scattered in the form of approximately spherical shape (a roundness of 0.7 or higher) high-melting-point metal particles without being dissolved in the low-melting-point alloy by feeding starting powders having the spherical high-melting-point metal particles comprising the high-melting-point metal element having a melting point of 2400°C or higher to the surface of the low-melting-point alloy member while applying a thermal energy to the surface of a low-melting-point alloy member having a melting point of 1600°C or lower to melt the low-melting-point alloy member. In this step, the thermal energy is applied to at least a part on the surface of the low-melting-point alloy member to melt at least a part of the low-melting-point alloy member, starting powders comprising high-melting-point metal powders are simultaneously fed to the molten pool of it to melt the low-melting-point alloy and solidify the low-melting-point alloy. Thus, an overlaid part comprising high-melting-point metal in which high-melting-point metal particles comprising at least some of the high-melting-point metal powders are scattered without the at least some of the high-melting-point metal powders being dissolved in the low-melting-point alloy is formed. In this case, it is critical to introduce high-melting-point metal powders having the melting point that is relatively different from that of the low-melting-point alloy member. A larger difference in the melting points enables the high-melting-point metal powders to remain in the form of high-melting-point metal particles in the overlaid part comprising high-melting-point metal without being dissolved in the low-melting-point alloy. The high-melting-point metal particles are excellent in hardness, heat resistance, and thermal conductivity. Thus, heat resistance and thermal conductivity of the composite material can be improved. In this step, only a small amount (e.g., approximately several % by mass) of a metal element (e.g., Fe) constituting the low-melting-point alloy may be dissolved in the high-melting-point metal particles at an insignificant level.

The low-melting-point alloy member used in the method for producing a composite material is as described in the "low-melting-point alloy member" section above. Accordingly, description thereof is omitted here. High-melting-point metal powders are not particularly limited, provided that such powders comprise high-melting-point metal particles having a melting point of 2400°C or higher. High-melting-point metal powders may comprise one or more types of powders comprising high-melting-point metal. Examples of such high-melting-point metal powders include powders comprising at least one type of high-melting-point metal selected from among W, Ta, Mo, and Nb. Powders comprising at least one of such metals, such as powders consisting of W, powders consisting of Ta, powders consisting of Mo, and powders consisting of Nb are preferable, with powders consisting of W being particularly preferable. Such high-melting-point metal powders can also be supplemented with powders comprising other metals. Examples thereof include high-melting-point metal powders supplemented with powders comprising V and/or Cr.

A method for applying a thermal energy is not particularly limited, provided that it enables formation of an overlaid part. For example, a thermal energy may be applied by means of a plasma arc, laser beam, or electron beam. A method of powder overlay welding described below is preferable.

### [Method for producing composite material II]

In the method for producing a composite material according to another embodiment, powders that further comprise low-melting-point alloy powders having a melting point of 1600°C or lower may be fed as the starting powders, in addition to the high-melting-point metal powders, in the step of forming the overlaid part comprising high-melting-point metal. When high-melting-point metal powders are selectively overlaid, a melting point at a site of the member subjected to overlaying is elevated as the number of stacking of overlaid layers is increased. This makes molding difficult to be performed by overlaying, and the number of stacking performed by overlaying is limited to approximately 1 to 5. If powders further comprising low-melting-point alloy powders are overlaid in addition to high-melting-point metal powders, an increase in a melting point at a site of the member subjected to overlaying can be suppressed even if the number of stacking is increased. Thus, 5 or more layers can be stacked by overlaying.

Low-melting-point alloy powders are not particularly limited, provided that such powders comprise a low-melting-point alloy having a melting point of 1600°C or lower. Low-melting-point alloy powders may comprise one or more types of powders comprising a low-melting-point alloy. Such low-melting-point alloy powders preferably comprise, for example, one type of low-melting-point alloy selected from among an Fe-based alloy, an Ni-based alloy, a Co-based alloy, a Ti-based alloy, a Cr-based alloy, and a high-entropy alloy, and powders comprising the Fe-based alloy are particularly preferable. Such powders are preferable because the Fe-based alloy is small in cost, the Ni-based alloy is inferior to the Fe-based alloy in terms of resistance to Al dissolution loss, and the Co-based alloy and the Ti-based alloy are likely to generate brittle structures such as a regular BCC phase or an intermetallic compound when mixed with a mold material.

The method for producing a composite material is preferably a method for forming the overlaid part comprising high-melting-point metal while preheating the low-melting-point alloy member to 300°C to 700°C in the step of forming the overlaid part comprising high-melting-point metal. Such method is preferable because cracking of the composite material can be suppressed.

### [Method for producing composite material III]

The method for producing a composite material according to another embodiment may further comprise, before the step of forming the overlaid part comprising high-melting-point metal, a step of forming a low-melting-point overlaid part by feeding starting powders comprising low-melting-point alloy powders having a melting point of 1600°C or lower to the surface of the low-melting-point alloy member while applying a thermal energy to the surface of the low-melting-point alloy member to melt the low-melting-point alloy. In the step of forming the low-melting-point overlaid part, the low-melting-point overlaid part may be formed as a part of the low-melting-point alloy member. In the step of forming the overlaid part comprising high-melting-point metal, the overlaid part comprising high-melting-point metal is preferably formed on the surface of the low-melting-point overlaid part of the low-melting-point alloy member.

The method for producing a composite material according to a modified example may further comprise a step of forming a low-melting-point overlaid part after the step of forming the overlaid part comprising high-melting-point metal. In the step of forming a low-melting-point overlaid part, while a thermal energy is applied to the surface of the overlaid part comprising high-melting-point metal to melt the overlaid part comprising high-melting-point metal, and the starting powders comprising the low-melting-point alloy powders are fed to the surface of the overlaid part comprising high-melting-point metal. Thus, the low-melting-point overlaid part is formed. In the method for producing a composite material according to a further modified example, the overlaid parts comprising high-melting-point metal and the low-melting-point overlaid parts are preferably stacked alternately on top of each other on the surface of the low-melting-point alloy member. Such method is preferable because an increase in the melting point in a site of the member subjected to overlaying can be suppressed even if the number of stacking is increased, and 5 or more layers can be stacked.

The method for producing a composite material is preferably, for example, a method for forming the low-melting-point overlaid part while preheating the low-melting-point alloy member to 300°C to 700°C in the step of forming the low-melting-point overlaid part. Such method is preferable because cracking of the composite material can be suppressed.

### [High-melting-point metal powders]

In order to scatter high-melting-point metal particles with a roundness of 0.7 or higher in the overlaid part comprising high-melting-point metal, high-melting-point metal powders preferably have an enhanced sphericity. For example, high-melting-point metal powders that have attained an enhanced sphericity by thermal plasma droplet refining (PDR) are preferable. Such powders are preferable because enhanced powder fluidity can further stabilize powder feeding. The average particle diameter of powders are not particularly limited, provided that such powders can be fed for powder overlaying, and the average particle diameter may be 1 µm to 200 µm to facilitate powder feeding. The average particle diameter is preferably 10 µm to 180, and more preferably 20 µm to 150 µm. The average particle diameter is indicated as the particle diameter d50 corresponding to the cumulative frequency of 50% in the cumulative frequency curve demonstrating the correlation between a particle diameter and the cumulative volume from the small particle diameter side. High-melting-point metal powders are not limited to those selectively comprising powders comprising high-melting-point metal, and high-melting-point metal powders may be granulated powders prepared with the addition of a small amount of metals having low melting points, such as Ni, Co, or Fe, as binders to the powders comprising high-melting-point metal.

A method for producing high-melting-point metal powders is not particularly limited. For example, high-melting-point metal powders can be produced by the thermal plasma-droplet-refining (PDR) method, the water atomization method, the gas atomization method, or the jet atomization method. When producing high-melting-point metal powders, such as powders consisting of W, compounds such as oxides of starting materials may be reduced to produce powders.

According to the PDR method, powders are molten and solidified with the aid of a thermal plasma, so that spherical powders in the form close to the true sphere form can be obtained because powders are spheroidized with the aid of surface tension at the time of droplet ejection.

The gas atomization method involves the use of, for example, inert gas such as nitrogen or argon or high-pressure gas such as air as an atomizing medium. Powders obtained by the gas atomization method easily become spherical. Because a cooling rate by gas is smaller than a cooling rate by water, molten particles of droplets become spherical because of the surface tension before the molten particles are solidified.

The jet atomization method involves the use of, for example, a combustion flame of kerosene as an atomizing medium. In the jet atomization method, a high-temperature flame jet is sprayed onto a molten metal at a speed higher than the sonic speed, and the molten metal is accelerated and pulverized for a relatively long period of time to form powders. Powders obtained by the jet atomization method easily become spherical, and a further refined particle distribution can be achieved.

### [Method of alloy powder overlaying]

Methods of overlaying of powders such as high-melting-point metal powders and low-melting-point alloy powders are not particularly limited, provided that an overlaid part, such as an overlaid part comprising high-melting-point metal or a low-melting-point overlaid part, can be formed on the surface of a member subjected to overlaying. Examples of methods that can be adopted include the method of plasma powder overlay welding and the method of laser powder overlay welding. The method of plasma powder overlay welding and the method of laser powder overlay welding can be types of additive manufacturing methods.

The method of plasma powder overlay welding involves the use of a plasma as a heat source. In the method of plasma powder overlay welding, welding is performed in an inert argon atmosphere. This enables formation of an overlaid part having a smooth surface and a small number of pores in its inside.

The method of laser powder overlay welding involves the use of a laser as a heat energy source. In the method of laser powder overlay welding, a heat input zone can be narrowed down. When a member subjected to overlaying is thin, accordingly, overlaying can be performed. In the method of laser powder overlay welding, in addition, a temperatureincreased area of the member subjected to overlaying is narrow. This increases a temperature gradient of the member, temperature of the member subj ected to overlaying is rapidly decreased after the laser beam passes therethrough, and the member is quenched. Thus, the method of laser powder overlay welding is advantageous for refinement of a dendritic structure because of a high solidification speed at the time of melting and solidification.

As the method of laser powder overlay welding, laser metal deposition (LMD) can be adopted. LMD comprises applying a laser beam to the surface of the member subjected to overlaying to melt the surface and simultaneously feeding the starting powders to the surface of the member to form an overlaid part.

In a method of powder overlaying, an overlaid part may be formed while preheating the member subj ected to overlaying (e.g., a member of a mold) to 300°C to 700°C in accordance with a material or configuration of the member subjected to overlaying. By performing preheating, deformation or cracking of an overlaid part caused by overlaying can be suppressed. A method of preheating is not particularly limited. For example, preheating can be performed by means of high-frequency induction heating, a gas burner, an infrared electric heater, a heating furnace, or application of an electron beam or a laser.

As starting powders for the overlaid part, alloy powders produced by the method described above or a method other than the method described above can be used.

The overlaid part, such as the overlaid part comprising high-melting-point metal or the low-melting-point overlaid part in which the content, the type, and other properties of high-melting-point metal particles are varied in accordance with, for example, the likelihood of damage or deformation occurring in regions of a structure, such as a mold, can be formed in various regions on the surface of the member subjected to overlaying. As described above, an adequate overlaid part may be formed in an adequate region on the surface of the member subjected to overlaying (e.g., a plane of a casting mold that is in contact with a molten metal or a processed plane of a press or forging mold that is in contact with a processing material) in accordance with the likelihood of damage or deformation occurring in various regions of a mold, so that a structure, such as a high-performance mold, that is excellent in anti-dissolution loss can be obtained.

### [Method of nitriding]

In order to further improve the dissolution loss resistance or surface hardness, the composite material may be entirely or partially subjected to surface hardening through diffusion such as nitriding or carburization, according to need. Examples of nitriding treatment that can be employed include radical nitriding, gas nitriding, and plasma ion nitriding. When nitriding is performed at high temperatures, disadvantageously, hardness of the overlaid part comprising high-melting-point metal or the low-melting-point alloy member may be lowered. Accordingly, nitriding is performed preferably at 600°C or lower, and more preferably at 550°C or lower. When nitriding is performed at excessively low temperatures, a nitrided layer is less likely to be formed. Thus, it is preferable that nitriding be performed at 400°C or higher.

### [Application]

A composite material can be used for any application without particular limitation, provided that a composite material can be used for a structure for an intended use. A mold such as a casting mold is preferable as the application (the structure), a casting mold used for casting of an aluminum alloy, such as a low-pressure casting, gravity casting, or die casting mold, is more preferable, and a casting mold used for die casting of an aluminum alloy is particularly preferable. Such casting molds are preferable because remarkable effects, such as improved dissolution loss resistance, can be achieved. A casting mold for an aluminum alloy is not particularly limited. Examples thereof include a low-pressure casting mold used for molding aluminum wheels and a casting mold used for molding aluminum cylinder heads for engines. The composite material can be extensively used for structures other than a casting mold that are required to be resistant to high temperatures. For example, the composite material can be used for a bearing that may generate a frictional heat at a high-speed revolution.

An application of the composite material may be a new structure, such as a casting mold, produced from a material or a repaired structure prepared by forming an overlaid part comprising high-melting-point metal in a site on the surface of a structure such as a casting mold where a damage or deformation has occurred (at least a part on the surface of the low-melting-point alloy member).

The method for producing a composite material may be adopted for a method for producing a new structure such as a casting mold or a method for producing a repaired structure prepared by forming an overlaid part comprising high-melting-point metal in a site on the surface of a structure such as a casting mold where a damage or deformation has occurred.

### Examples

Hereafter, the composite material, the method for producing the composite material, and the mold according to the present invention are described in greater detail with reference to the examples.

### [Example 1]

At the outset, a plate material of the Fe-based alloy (melting point: approximately 1540°C) shown in Table 1 was prepared. Each numerical value indicates % by mass.

**[Table 1]**

| Fe | Ni | Co | Mo | Ti | Al | Mn | Si | P | C | S |
|---|---|---|---|---|---|---|---|---|---|---|
| Bal. | 18.36 | 9.01 | 4.90 | 0.91 | 0.11 | 0.02 | 0.01 | 0.004 | 0.001 | <0.001 |

Subsequently, pure tungsten powders consisting of W (high-melting-point metal powders) were fed to a part on the surface of the prepared plate material M1 of the Fe-based alloy (i.e., a low-melting-point alloy member) via laser metal deposition (LMD) to produce a composite material comprising a layer overlaid thereon by additive manufacturing. As Example 1, a composite material C1 was produced using spherical pure tungsten powders with the average particle diameter of 25 µm prepared by thermal plasma-droplet-refining (PDR). As Reference Example, a composite material C2 was produced using grounded pure tungsten powders with a particle diameter of 53 µm.

Specifically, both the composite materials of Example 1 and Reference Example were subjected to a step of overlaying comprising applying a laser beam to melt the surface of the plate material of the Fe-based alloy and simultaneously feeding pure tungsten powders (starting powders) to the surface of the plate material M1 of the Fe-based alloy. Thus, a layer of the overlaid part comprising high-melting-point metal was formed. Lasertec 65-3D (DMG MORI CO., LTD.) was used as an apparatus for additive manufacturing. Conditions for powder overlaying were as described below.

### <Conditions for powder overlaying of Examples and Reference Example>

Laser scanning speed: 500 mm/min
Starting powder feed rate: 14 g/min
Laser beam output: 1.8 kW

### [Optical microscopic observation and roundness (circularity)]

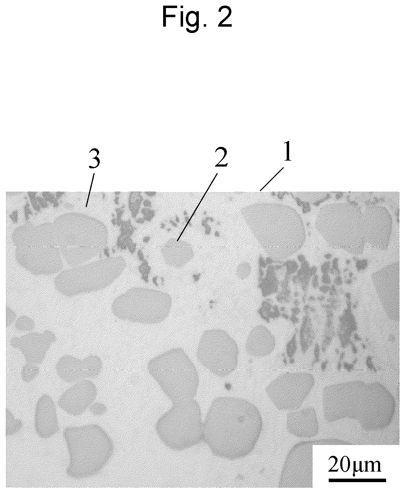

The composite materials of Example 1 and Reference Example were each cut on a plane perpendicular to the extended direction of a bead (the overlaid part comprising high-melting-point metal) to obtain a cross section, the cross section was mirror-polished, and the polished cross sections were observed under an optical microscope. Figure 1 B and Figure 2 each show an optical microscope image of Example 1 and an optical microscope image of Reference Example observed at 500× magnification. When focusing on the bead of pure tungsten powder overlaying (the overlaid part 1 comprising high-melting-point metal), scattered gray particles are observed in both Figure 1 B and Figure 2. Such scattered particles are tungsten particles remaining undissolved. Accordingly, a roundness of tungsten particles (high-melting-point metal particles) and the Vickers hardness of the bead (the overlaid part comprising high-melting-point metal) were measured below.

### (Measurement of roundness)

A roundness was determined by obtaining an optical microscope image observed at 500× magnification and digitizing tungsten particles and substances other than the tungsten particles in the optical microscope image by image processing using image analysis software "Azoukun ver. 2.5" (Asahi Kasei Engineering Corporation.) to calculate the roundness based on the area and the peripheral length of the tungsten particles in accordance with the equation (3) below. Roundness = 4 × π × (the area of high-melting-point metal particles) / (the peripheral length of the high-melting-point metal particles)2

The optical microscope images obtained at two sites were analyzed in terms of a roundness of high-melting-point metal particles in each of the sites where the optical microscope images had been obtained, the roundness and the number of particles obtained in one site were totalized with those obtained in another site, and the percentage of particles by roundness was determined.

Table 2 shows the results of measurement of the roundness of the tungsten particles (high-melting-point metal particles) of Example 1 and Reference Example.

In the composite material of Example 1, the percentage of particles with the roundness of 0.7 to 1.0 was 62%. This indicates that the form of spherical tungsten particles is directly reflected. In the composite material of Reference Example, in contrast, the percentage of particles with the roundness of 0.7 to 1.0 was as low as 26%. The area ratio of tungsten particles of Example 1 was 32%, and it was substantially the same as that of Reference Example, which was 30%.

The depth of the overlaid part comprising high-melting-point metal from the surface of the plate material (the low-melting-point alloy member) of Example 1 was approximately 900 µm to 950 µm, and that of Reference Example was approximately 550 µm to 600 µm.

**[Table 2]**

| Roundness | Percentage(%) | |
|---|---|---|
| | Example 1 | Reference Example |
| Lower than 0.7 | 38 | 74 |
| 0.7 to 1.0 | 62 | 26 |

### (Measurement of Vickers hardness)

The composite materials of Example 1 and Reference Example were subjected to measurement of the Vickers hardness (Hv1) of the overlaid part comprising high-melting-point metal and the Fe-based alloy part at room temperature. Specifically, a plane of the overlaid part comprising high-melting-point metal and that of the Fe-based alloy part were mirror-polished, and the hardness of the polished planes were measured. Conditions for measurement of hardness were as described below, measurement was performed 5 times, and the average of the 5 measured values was designated as the Vickers hardness.

### (Conditions for measurement of hardness)

- Apparatus type: Microhardness tester (FUTURE-TECH CORP.)
- Indentation load: 1000 gf
- Retention time: 15 seconds

As a result, the composite material of Example 1 was found to have the Vickers hardness of 592 Hv in the Fe-based alloy part and the Vickers hardness of 402 Hv in the overlaid part comprising high-melting-point metal, and the composite material of Reference Example was found to have the Vickers hardness of 591 Hv in the Fe-based alloy part and the Vickers hardness of 354 Hv in the overlaid part comprising high-melting-point metal. The results are shown in Table 6. An example of a conventional alloy is DENSIMET 185 (Plansee SE, Austria; DENSIMET is a registered trademark of Plansee). The hardness of the overlaid part using such alloy is approximately 392 Hv. This indicates that the composite material attained higher hardness because of the tungsten particles remained and scattered therein. In general, the overlaid part is less likely to achieve hardness because it is significantly affected by a heat; however, both the composite materials of Example 1 and Reference Example may have achieved sufficient hardness as materials for repairing molds. In particular, the composite material of Example 1 comprising a larger quantity of tungsten particles with high roundness is more effective because of higher hardness.

### [Example 2]

The plate material M2 of the Fe-based alloy as shown in Table 3 was prepared. Each numerical value indicates % by mass.

Subsequently, pure tungsten powders were fed to a part on the surface of the plate material M2 of the Fe-based alloy by laser metal deposition (LMD) to produce a composite material C3 comprising a layer of the overlaid part. The pure tungsten powders as used in Example 1 were used herein. The apparatus for additive manufacturing, the conditions for powder overlaying, and other conditions as used in Example 1 were employed herein.

**Table 3**

| Fe | Cr | Mo | Si | V | Mn | C | P | S |
|---|---|---|---|---|---|---|---|---|
| Bal. | 5.10 | 1.24 | 0.98 | 0.83 | 0.40 | 0.38 | 0.009 | <0.001 |

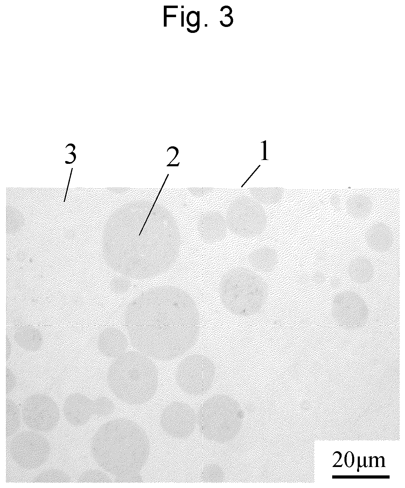

Subsequently, the overlaid part comprising high-melting-point metal was observed under an optical microscope in the same manner as in Example 1. In order to facilitate observation of the overlaid part comprising high-melting-point metal, the plate material was soaked in a Nital solution composed of 3% nitric acid and 97% ethanol for approximately 10 seconds before observation. As shown in Figure 3, scattered tungsten particles 2 were observed in Example 2. Thereafter, the roundness of the tungsten particles and the Vickers hardness of the overlaid part comprising high-melting-point metal were measured in the same manner as in Example 1. The results are shown in Table 5 and Table 6.

### [Example 3]

The plate material M3 of the Ni-based alloy as shown in Table 4 was prepared. Each numerical value indicates % by mass.

Subsequently, pure tungsten powders were fed to a part on the surface of the plate material M3 of the Ni-based alloy by laser metal deposition (LMD) to produce a composite material C5 comprising a layer of the overlaid part. The pure tungsten powders as used in Example 1 were used herein. The apparatus for additive manufacturing, the conditions for powder overlaying, and other conditions as used in Example 1 were employed herein.

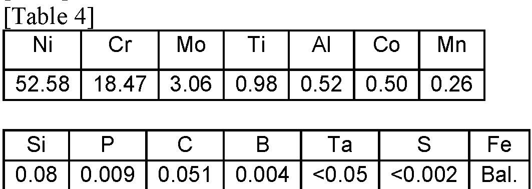

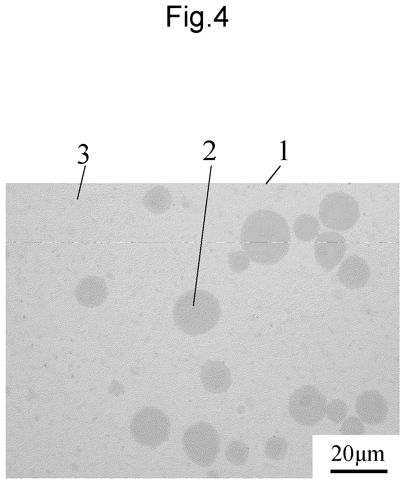

Subsequently, the overlaid part comprising high-melting-point metal was observed under an optical microscope in the same manner as in Example 1. As shown in Figure 4, scattered tungsten particles 2 were observed. Thereafter, the roundness of the tungsten particles and the Vickers hardness of the overlaid part comprising high-melting-point metal were measured in the same manner as in Example 1. The results are shown in Table 5 and Table 6.

Table 5 shows the results of measurement of the roundness of the composite materials of Example 2 and Example 3. In both the composite materials of Example 2 and Example 3, the percentage of the particles with the roundness of 0.7 or higher was found to be 40% or more. Since the composite material of Example 3 was an alloy comprising a large quantity of Ni, it is deduced that a large quantity of the laser input energy was consumed to melt the plate material and, as a consequence, the amount of the remaining tungsten particles was increased. The area ratio of tungsten particles was 24% in Example 2 and that was 14% in Example 3.

The depth of the overlaid part comprising high-melting-point metal from the surface of the plate material of Example 2 was approximately 450 µm to 460 µm, and that of Example 3 was approximately 1100 µm to 1130 µm. Thus, the depth of the overlaid part was 300 µm or more in all of the composite materials of Examples 1 to 3.

**[Table 5]**

| Roundness | Percentage (%) | |
|---|---|---|
| | Example 2 | Example 3 |
| Lower than 0.7 | 56 | 27 |
| 0.7 to 1.0 | 44 | 73 |

Table 6 shows the results of measurement of the Vickers hardness. The composite material of Example 2 was found to have the Vickers hardness of 465 Hv in the Fe-based alloy part and the Vickers hardness of 531 Hv in the overlaid part comprising high-melting-point metal, and the composite material of Example 3 was found to have the Vickers hardness of 208 Hv in the Ni-based alloy part and the Vickers hardness of 313 Hv in the overlaid part comprising high-melting-point metal. That is, both the overlaid parts of Example 2 and Example 3 were found to have higher hardness than the hardness of the overlaid part of an equivalent conventional alloy.

**Table 6**

| | Vickers hardness | Example 1 (Fe-base 1) | Reference Example (Fe-base 1) | Example 2 (Fe-base 2) | Example 3 (Ni-base) |
|---|---|---|---|---|---|
| Composite material | Low-melting-point alloy part (plate material) | 592 | 591 | 465 | 208 |
| | Overlaid part comprising high-melting-point metal | 402 | 354 | 531 | 313 |

### [Example 4]

The composite material C1 of Example 1 was subjected to the ion-plasma nitriding treatment. Specifically, a part of the bead was cut with a wire cutter, and the sample was introduced into a plasma nitriding furnace with the inner furnace dimension of Φ 700 mm × 1200 mm (effective inner furnace dimension: Φ 600 mm × 600 mm). Before the nitriding treatment, the inside of the furnace was heated to 410°C in vacuum, the surface of the sample was subjected to gas etching at a gas rate of N₂:H₂: Ar of 6:91:3, and the nitriding treatment was then performed at 510°C for 10 hours.

In order to measure the surface hardness of the nitrided layer of the overlaid part comprising high-melting-point metal after the nitriding treatment, measurement was performed in the same manner at an indentation load of 25 g. As a result, the Vickers hardness was found to be 481 Hv. The surface hardness was improved as a result of the nitriding treatment.

The embodiments of the present invention are described above with reference to the figures and the like. It should be noted that the present invention is not limited to the embodiments described above. Any embodiments having substantially the identical constitution and similar effects with the technique disclosed in the claims of the present invention are within the technical scope of the present invention, and the present invention includes various modified examples. For example, the embodiments are intended to illustrate the present invention, and the present invention is not limited to embodiments comprising all the constitutions described herein. Also, a part of a constitution according to an embodiment may be substituted with a constitution according to another embodiment, and a constitution according to another embodiment may be added to a constitution according to an embodiment. In addition, a part of a constitution according to an embodiment may be supplemented with, deleted, or substituted with other constitutions.

Reference Signs List

1: Overlaid part comprising high-melting-point metal
2: High-melting-point metal particles
3: Binder phase
M1, M2, and M3: Plate material
C1 to C5: Composite material

## Claims

1. A composite material comprising an overlaid part comprising high-melting-point metal in at least a part on the surface of a low-melting-point alloy member having a melting point of 1600°C or lower, wherein the overlaid part comprising high-melting-point metal comprises high-melting-point metal particles comprising high-melting-point metal elements having a melting point of 2400°C or higher scattered therein, and 40% or more of the high-melting-point metal particles has a roundness of 0.7 or higher.

2. The composite material according to claim 1, wherein the high-melting-point metal particles comprise the high-melting-point metal elements that account for 90% by mass or more thereof.

3. The composite material according to claim 1 or 2, wherein the overlaid part comprising high-melting-point metal has the Vickers hardness of 300 Hv or higher.

4. The composite material according to claim 1, wherein the overlaid part comprising high-melting-point metal has a depth from the surface of the low-melting-point alloy member of 300 µm or more.

5. The composite material according to claim 1, wherein the low-melting-point alloy member comprises one type of low-melting-point alloy selected from among a Fe-based alloy, a Ni-based alloy, a Co-based alloy, a Ti-based alloy, a Cr-based alloy, and a high-entropy alloy and the high-melting-point metal particles comprise at least one type of high-melting-point metal element selected from among W, Ta, Mo, and Nb.

6. The composite material according to claim 1, wherein the overlaid part comprising high-melting-point metal has a nitrided layer in at least a part on the surface of the overlaid part comprising high-melting-point metal.

7. A mold using the composite material according to claim 1.

8. A method for producing a composite material comprising a step of forming an overlaid part comprising high-melting-point metal in which the high-melting-point metal particles are scattered by feeding starting powders comprising high-melting-point metal particles comprising high-melting-point metal elements having a melting point of 2400°C or higher with a roundness of 0.7 or higher to the surface of the low-melting-point alloy member while applying an energy to the surface of a low-melting-point alloy member having a melting point of 1600°C or lower to melt the low-melting-point alloy member.

9. The method for producing a composite material according to claim 8, wherein the low-melting-point alloy member comprises one type of a low-melting-point alloy selected from among a Fe-based alloy, a Ni-based alloy, a Co-based alloy, a Ti-based alloy, a Cr-based alloy, and a high-entropy alloy and the starting powders comprise at least one type of high-melting-point metal element selected from among W, Ta, Mo, and Nb.

10. The method for producing a composite material according to claim 8 or 9, which comprises a step of forming a nitrided layer comprising nitrogen scattered therein by allowing nitrogen to scatter on the surface of the overlaid part comprising high-melting-point metal.
